# FASCICULE DE BREVET EUROPEEN

(11) **EP 3 176 529 B1**
(45) Date de publication et mention de la délivrance du brevet: **14.11.2018**
(21) Numéro de dépôt: 16306489.2
(22) Date de dépôt: 15.11.2016
(51) Int. Cl.: F28D 20/00, F02C 6/16, F28D 20/02

(54) **SYSTEME ET PROCEDE DE STOCKAGE ET DE RESTITUTION D'ENERGIE PAR GAZ COMPRIME**
SYSTEM UND VERFAHREN ZUR SPEICHERUNG UND RÜCKGEWINNUNG VON ENERGIE DURCH KOMPRIMIERTES GAS
SYSTEM AND METHOD FOR STORING AND RESTORING ENERGY BY COMPRESSED GAS

(30) Priorité: 04.12.2015 FR 1561875
(43) Date de publication de la demande: 07.06.2017
(73) Titulaire: IFP Energies nouvelles, 92500 Rueil-Malmaison (FR)
(72) Inventeur: SANZ, Elena, 69005 LYON (FR); NASTOLL, Willi, 69007 LYON (FR); VINAY, Guillaume, 92500 RUEIL-MALMAISON (FR); PLAIS, Cecile, 69420 LES HAIES (FR)
(74) Mandataire: IFP Energies nouvelles

(56) Documents cités:
- EP-A2- 2 450 549
- WO-A1-2013/131202
- WO-A1-2015/150104
- DE-A1-102008 033 527

## Description

Le domaine de la présente invention concerne le stockage d'énergie par gaz comprimé, notamment de l'air (CAES de l'anglais « Compressed Air Energy Storage »). En particulier, la présente invention concerne un système AACAES (de l'anglais « Advanced Adiabatic Compressed Air Energy Storage ») dans lequel est prévu le stockage du gaz et le stockage de la chaleur générée. Plus en particulier encore, l'invention concerne un système de stockage et de restitution d'énergie tel que défini au préambule de la revendication 1 et tel que divulgué par le document DE 10 2008 033 527 A1.

Dans un système de stockage d'énergie par air comprimé (CAES), l'énergie, que l'on souhaite utiliser ultérieurement, est stockée sous forme d'air comprimé. Pour le stockage, une énergie, notamment électrique, entraîne des compresseurs d'air, et pour le déstockage, l'air comprimé entraîne des turbines, qui peuvent être reliées à une génératrice électrique. Le rendement de cette solution n'est pas optimal car une partie de l'énergie de l'air comprimé se retrouve sous forme de chaleur qui n'est pas utilisée. En effet, dans les procédés CAES, on n'utilise que l'énergie mécanique de l'air, c'est-à-dire qu'on rejette toute la chaleur produite lors de la compression. A titre d'exemple, de l'air comprimé à 8 MPa (80 bar) se réchauffe pendant la compression jusqu'à environ 423 K (soit environ 150°C), mais il est refroidi avant le stockage. De plus, le rendement d'un système CAES n'est pas optimal, car ensuite le système nécessite de chauffer l'air stocké pour réaliser la détente de l'air. En effet, si l'air est stocké à 8 MPa (80 bar) et à température ambiante et si l'on désire récupérer l'énergie par une détente, la décompression de l'air suit à nouveau une courbe isentropique, mais cette fois à partir des conditions initiales de stockage (environ 8 MPa et 300 K). L'air se refroidit donc jusqu'à des températures non réalistes (83 K soit -191°C). Il est donc nécessaire de le réchauffer, ce qui peut se faire à l'aide d'un brûleur à gaz, ou autre carburant.

Plusieurs variantes existent actuellement à ce système. On peut citer notamment les systèmes et procédés :
- ACAES (de l'anglais « Adiabatic Compressed Air Energy Storage ») dans lequel l'air est stocké à la température due à la compression. Toutefois, ce type de système nécessite un système de stockage spécifique, volumineux et coûteux car il nécessite une isolation thermique sur tout le volume de stockage de l'air.
- AACAES (de l'anglais « Advanced Adiabatic Compressed Air Energy Storage ») dans lequel l'air est stocké à température ambiante, et la chaleur due à la compression est également stockée, séparément, dans un système de stockage de la chaleur TES (de l'anglais « Thermal Energy Storage »). La chaleur stockée dans le TES est utilisée pour chauffer l'air avant sa détente.

Une première solution envisagée pour le système de stockage de chaleur TES est l'utilisation d'un fluide caloporteur permettant de stocker la chaleur issue de la compression pour la restituer à l'air avant la détente au moyen d'échangeurs de chaleur. Par exemple, la demande de brevet EP 2447501 décrit un système AACAES dans lequel de l'huile, utilisée en tant que fluide caloporteur, circule en circuit fermé pour échanger de la chaleur avec l'air. Par ailleurs, les demandes de brevet EP 2530283 et WO 2011053411 décrivent un système AACAES, dans lequel les échanges de chaleur sont réalisés par un fluide caloporteur circulant dans un circuit fermé, le circuit fermé comprenant un unique réservoir de fluide caloporteur.

Toutefois, les systèmes décrits dans ces demandes de brevet nécessitent des moyens spécifiques de stockage et de circulation du fluide caloporteur. De plus, pour ces systèmes, des pertes de charge importantes sont générées par les échangeurs de chaleur utilisés.

Une deuxième solution envisagée pour le système de stockage de chaleur TES repose sur un stockage statique de la chaleur (sans déplacement du matériau de stockage). Dans ce cas, un bon maintien du gradient thermique dans les moyens de stockage de la chaleur est requis, car il permet de conserver une température froide et une température chaude constantes, et donc d'assurer un meilleur transfert thermique lors de la charge et de la décharge. Ceci est particulièrement important vis-à-vis du maintien de l'efficacité du système au cours des différents cycles de charge et décharge. Pour répondre à cette exigence, des moyens de stockage de chaleur dans des solides statiques ont été proposés. Pour obtenir cette stratification thermique avec un stockage de la chaleur solide, il peut être utilisé un stockage de chaleur par lit fixe de particules solides à travers lequel le fluide à refroidir passe. Cependant, au cours du chargement et de l'empilement des particules, des hétérogénéités, responsables d'une porosité non uniforme, peuvent apparaître au sein du lit, ce qui peut générer des passages préférentiels de fluide, et donc conduire à un gradient thermique non homogène (présence de zones froides et de zones chaudes à différents endroits du lit). Cet effet est, de plus, accentué au cours du fonctionnement du système à cause des dilatations des particules lors du passage du fluide chaud, dégradant fortement les performances de stockage et de restitution de la chaleur.

La demande de brevet FR 3014182 décrit un système AACAES dans lequel le système de stockage et de restitution de la chaleur comprend une pluralité de moyens de stockage de chaleur étagés en sortie de chaque étage de compression, chaque moyen de stockage ayant une température de stockage de chaleur propre. Ce système, s'il permet un contrôle du gradient thermique satisfaisant, est, du fait de la multiplicité des moyens de stockage, relativement coûteux et présente une opérabilité moindre.

Pour pallier ces inconvénients, tout en permettant la maîtrise du gradient thermique, la présente invention concerne un système et un procédé de stockage et de restitution d'énergie par gaz comprimé (par exemple du type AACAES, c'est-à-dire impliquant de l'air) dans lequel le moyen de stockage de chaleur est formé d'un agencement étagé d'au moins deux lits fixes de particules de stockage de chaleur, et comprend au moins un moyen d'induire au moins une discontinuité du gradient thermique entre deux lits adjacents. Cette mise en oeuvre peut permettre une stratification thermique contrôlée au sein dudit moyen de stockage de chaleur, et notamment d'éviter la formation de poches froides qui nuisent à l'efficacité du système. De plus, cet objectif peut être atteint au sein d'un même et unique moyen de stockage de chaleur, ce qui confère au système selon l'invention une meilleure opérabilité, et ce à moindre coût, par rapport à l'art antérieur. Ainsi, le système selon l'invention permet d'augmenter l'efficacité globale du stockage et de la restitution d'énergie par gaz comprimé.

### Le système et le procédé selon l'invention

Ainsi, la présente invention concerne un système de stockage et de restitution d'énergie par gaz comprimé comportant au moins un moyen de compression de gaz, au moins un moyen de stockage du gaz comprimé, au moins un moyen de détente dudit gaz comprimé pour générer une énergie, et au moins un moyen de stockage de la chaleur, caractérisé en ce que ledit moyen de stockage de la chaleur comporte un agencement étagé formé d'au moins deux lits fixes de particules de stockage de la chaleur, et au moins un moyen pour former une discontinuité du gradient thermique entre au moins deux lits adjacents.

Avantageusement, lesdits deux lits fixes peuvent être séparés par une paroi perméable audit gaz.

Selon un mode de mise en oeuvre de l'invention, un desdits moyens de discontinuité dudit gradient thermique peut comprendre une couche formée d'un matériau isolant thermiquement, ladite couche séparant au moins deux desdits lits fixes.

Selon un mode de mise en oeuvre de l'invention, un desdits moyens de discontinuité dudit gradient thermique peut être formé par au moins deux desdits lits fixes comportant des particules de matériau à changement de phase.

Avantageusement, lesdits au moins deux lits fixes peuvent comporter des particules de matériau à changement de phase de température de fusion différente et peuvent être situés chacun à proximité d'une des extrémités dudit moyen d'échange de la chaleur.

Préférentiellement, lesdits au moins deux lits fixes peuvent comporter des particules de matériau à changement de phase de température de fusion différente et peuvent être situés en deuxième position dudit agencement en comptant à partir d'une extrémité dudit moyen d'échange de la chaleur.

Selon un mode de mise en oeuvre de l'invention, un passage principalement axial dudit gaz comprimé au travers desdits lits fixes peut être induit par des moyens d'injection et de soutirage de gaz comprimé placés axialement par rapport audit moyen de stockage.

Avantageusement, ledit moyen de stockage peut comporter des moyens d'injection et de soutirage de gaz complémentaires situés à au moins un étage dudit agencement étagé de lit fixes de particules de stockage.

Selon un mode de mise en oeuvre de l'invention, lesdits moyens d'injection et de soutirage de gaz comprimé complémentaires peuvent comprendre une grille de distribution intercalée entre lesdits lits constitutifs dudit étage.

Avantageusement, une couche formée d'un matériau isolant thermiquement peut être accolée sur l'une des faces de ladite grille.

De plus, l'invention concerne un procédé de stockage et de restitution d'énergie par gaz comprimé, dans lequel on réalise les étapes suivantes :
a) on comprime un gaz ;
b) on refroidit ledit gaz comprimé par échange de chaleur dans un moyen de stockage de la chaleur ;
c) on stocke ledit gaz refroidi ;
d) on chauffe ledit gaz comprimé refroidi par restitution de la chaleur dans ledit moyen de stockage de la chaleur ; et
e) on détend ledit gaz comprimé chauffé pour générer une énergie,
caractérisé en ce que pour stocker et restituer la chaleur, ledit gaz traverse ledit moyen de stockage de la chaleur, ledit moyen comprenant un agencement étagé formé d'au moins deux lits fixes de particules de stockage de la chaleur, et au moins un moyen pour former une discontinuité du gradient thermique entre au moins deux lits adjacents.

Selon un mode de mise en oeuvre de l'invention, on peut injecter et soutirer ledit gaz aux extrémités dudit moyen de stockage de la chaleur.

Avantageusement, on peut injecter et soutirer ledit gaz au niveau d'au moins un lit fixe intermédiaire.

Selon un mode de mise en oeuvre de l'invention, on peut mettre en oeuvre les étapes suivantes :
i. on stocke la chaleur sur une première portion desdits lits fixes par un premier échange de chaleur avec ledit gaz ;
ii. on stocke la chaleur sur une deuxième portion desdits lits fixes par un deuxième échange de chaleur avec ledit gaz ; et
iii. on restitue la chaleur de ladite première et/ou deuxième portion par échange de chaleur avec ledit gaz.

### Présentation succincte des figures

D'autres caractéristiques et avantages du système et du procédé selon l'invention, apparaîtront à la lecture de la description ci-après d'exemples non limitatifs de réalisations, en se référant aux figures annexées et décrites ci-après.
La figure 1 illustre un système de stockage et de récupération d'énergie par gaz comprimé selon l'invention.
Les figures 2 et 3 illustrent un système de stockage de la chaleur selon un mode de réalisation de l'invention, respectivement lors de la charge et de la décharge du moyen de stockage de la chaleur. Les figures 2 et 3 représentent en outre les gradients de température au sein du moyen de stockage de la chaleur.
La figure 4 illustre un système de stockage de la chaleur selon un mode de réalisation de l'invention, lors de la charge du moyen de stockage de la chaleur. La figure 4 représente en outre le gradient de température au sein du moyen de stockage de la chaleur.
La figure 5 illustre un système de stockage de la chaleur selon un mode de réalisation de l'invention, lors de la charge du moyen de stockage de la chaleur.
La figure 6 illustre un système de stockage de la chaleur selon un mode de réalisation de l'invention.
Les figures 7a, 7b et 7c représentent un moyen de stockage de la chaleur selon un mode de réalisation de l'invention, respectivement pour trois charges consécutives. Les figures 7a, 7b et 7c représentent en outre les gradients de température au sein du moyen de stockage de la chaleur.
Les figures 8a, 8b et 8c représentent un moyen de stockage de la chaleur selon un mode de réalisation de l'invention, respectivement pour trois décharges consécutives. Les figures 8a, 8b et 8c représentent en outre les gradients de température au sein du moyen de stockage de la chaleur.
La figure 9 illustre schématiquement les gradients de température entre deux instants dans un moyen de stockage de la chaleur selon le mode de réalisation de la figure 4.

### Description détaillée de l'invention

La présente invention concerne un système de stockage et de restitution d'énergie par gaz comprimé équipé d'un moyen de stockage de la chaleur (par exemple du type AACAES). Dans cette mise en oeuvre, le gaz sous pression (souvent de l'air) est stocké froid. Le système selon l'invention comporte :
- au moins un moyen de compression de gaz (ou compresseur), et de préférence plusieurs moyens de compression de gaz étagés. Le moyen de compression de gaz peut être entraîné par un moteur, notamment un moteur électrique ;
- au moins un moyen de stockage du gaz comprimé (appelé également réservoir) par le moyen de compression du gaz. Le moyen de stockage du gaz comprimé peut être un réservoir naturel (par exemple une cavité souterraine) ou non. Le moyen de stockage du gaz comprimé peut être en surface ou en sous-sol. De plus, il peut être formé d'un unique volume ou d'une pluralité de volumes connectés entre eux ou non ;
- au moins un moyen de détente du gaz (appelé également détendeur ou turbine), permettant de détendre le gaz comprimé et stocké, et de préférence plusieurs moyens de détente de gaz étagés. Le moyen de détente du gaz permet de générer une énergie, notamment une énergie électrique au moyen d'un générateur ;
- au moins un moyen de stockage de la chaleur, permettant le stockage de la chaleur issue du gaz comprimé lors de la phase de stockage d'énergie, et permettant la restitution de la chaleur stockée au gaz comprimé lors de la phase de la restitution d'énergie. Selon l'invention, le moyen de stockage de la chaleur comporte un agencement étagé formé d'au moins deux lits fixes, chaque lit fixe étant formé de particules de stockage de la chaleur. Les particules formant chacun des lits fixes échangent de la chaleur avec le gaz lors des phases de stockage et de restitution d'énergie, cette chaleur étant stockée dans les particules entre ces deux phases. On appelle lit fixe, un ensemble de particules de stockage de chaleur, dans lequel les particules sont immobiles. On appelle un agencement étagé de lits, des lits qui sont superposés les uns au-dessus des autres. Selon l'invention, ledit moyen de stockage de chaleur comprend au moins un moyen pour former une discontinuité du gradient thermique entre au moins deux lits adjacents. Par gradient thermique discontinu, on entend un gradient thermique présentant des ruptures de pente, c'est-à-dire que la dérivée de la courbe représentant l'évolution de la température dans le moyen de stockage de chaleur selon l'invention n'est pas continument dérivable.

On utilise les termes « moyens de compression étagés » (respectivement « moyens de détente étagés »), lorsque une pluralité de moyens de compression (respectivement de détente) sont montés successivement les uns après les autres en série : le gaz comprimé (respectivement détendu) en sortie du premier moyen de compression (respectivement de détente) passe ensuite dans un deuxième moyen de compression (respectivement de détente) et ainsi de suite. On appelle alors un étage de compression ou de détente, un moyen de compression ou de détente de la pluralité de moyens de compression ou de détente étagés. Avantageusement, lorsque le système comporte une pluralité d'étages de compression et/ou de détente, un moyen de stockage (d'échange) de chaleur est disposé entre chaque étage de compression et/ou de détente. Ainsi, le gaz comprimé est refroidi entre chaque compression, ce qui permet d'optimiser le rendement de la compression suivante, et le gaz détendu est chauffé entre chaque détente, ce qui permet d'optimiser le rendement de la détente suivante. Le nombre d'étages de compression et le nombre d'étages de détente peuvent être compris entre 2 et 10, de préférence entre 3 et 5. De préférence, le nombre d'étages de compression est identique au nombre d'étages de détente. Alternativement, le système de stockage et de restitution d'énergie par gaz comprimé (par exemple de type AACAES) selon l'invention peut contenir un seul moyen de compression et un seul moyen de détente.

Selon une variante de réalisation de l'invention, les moyens de compression, étagés ou non, peuvent être réversibles, c'est-à-dire qu'ils peuvent fonctionner à la fois pour la compression et pour la détente. Ainsi, il est possible de limiter le nombre de dispositifs utilisés dans le système selon l'invention, ce qui permet un gain en poids et en volume du système selon l'invention.

Selon une variante de réalisation, les moyens d'échange de chaleur utilisés entre les étages de compression peuvent être ceux utilisés entre les étages de détente.

Le système selon l'invention est adapté à tout type de gaz, notamment pour l'air. Dans ce cas, l'air en entrée utilisé pour la compression peut être prélevé de l'air ambiant, et l'air en sortie après la détente peut être relâché dans l'air ambiant. Dans la suite de la description, seule la variante de réalisation avec de l'air comprimé, et son application AACAES seront décrites. Toutefois, le système et le procédé sont valables pour tout autre gaz.

Les moyens de stockage de la chaleur permettent, lors du stockage du gaz comprimé (compression), de récupérer un maximum de chaleur issue de la compression du gaz en sortie des compresseurs, et de diminuer la température du gaz avant le passage à la compression suivante ou avant le stockage du gaz comprimé. Par exemple, le gaz comprimé peut passer d'une température supérieure à 150 °C (par exemple environ 190 °C) à une température inférieure à 80 °C (par exemple environ 50 °C). Les moyens de stockage de la chaleur permettent, lors de la restitution de l'énergie, de restituer un maximum de chaleur stockée en augmentant la température du gaz avant le passage à la détente suivante. Par exemple, le gaz peut passer d'une température inférieure à 80 °C (par exemple environ 50 °C), à une température supérieure à 150 °C (par exe mple environ 180 °C).

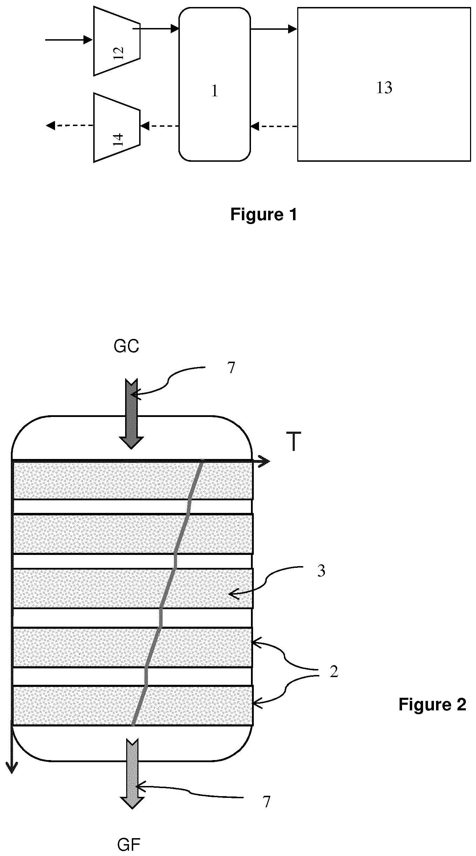

La figure 1 illustre un exemple de réalisation non limitatif d'un système de stockage et de restitution de l'énergie par gaz comprimé selon l'invention, tel qu'un système AACAES. Sur cette figure, les flèches en trait continu illustrent la circulation du gaz lors des étapes de compression (stockage d'énergie), et les flèches en pointillés illustrent la circulation du gaz lors des étapes de détente (restitution d'énergie). Cette figure illustre un système AACAES comprenant un seul étage de compression 12, un seul étage de détente 14 et un système de stockage de la chaleur 1. Le système comporte un réservoir de stockage 13 du gaz comprimé. Le système de stockage de la chaleur 1 est intercalé entre l'étage de compression/détente 12 ou 14 et le réservoir de stockage 13 du gaz comprimé. Classiquement, en phase de stockage d'énergie (compression), l'air est d'abord comprimé dans le compresseur 12, puis refroidi dans le système de stockage de la chaleur 1. Le gaz comprimé et refroidi est stocké dans le réservoir 13. Les particules de stockage de la chaleur du système de stockage de la chaleur 1 sont chaudes suite au refroidissement du gaz comprimé dans la phase de compression. Lors de la restitution de l'énergie (détente), le gaz comprimé stocké est chauffé dans le système de stockage de la chaleur 1. Ensuite, de manière classique, le gaz passe au travers d'un ou plusieurs étages de détente 14 (un étage selon l'exemple illustré en figure 1).

Le système selon l'invention n'est pas limité à l'exemple de la figure 1. D'autres configurations peuvent être envisagées : un nombre différent d'étages de compression et/ou de détente, l'utilisation de moyens réversibles assurant la compression et la détente, etc.

Selon l'invention, le moyen de stockage de chaleur comprend au moins un moyen pour former une discontinuité du gradient thermique entre au moins deux lits adjacents. Une discontinuité du gradient thermique au sein du moyen de stockage permet de limiter les mouvements de convection naturelle au sein du moyen de stockage de chaleur, potentiellement générateurs de zones non homogènes thermiquement (formation de poches froides) qui nuisent à l'efficacité du système sont ainsi évités. Ainsi le moyen de stockage de chaleur du système de stockage et de restitution de l'énergie par gaz comprimé selon l'invention permet le contrôle du gradient thermique, et ce, au sein d'un seul et même moyen de stockage de chaleur. Ainsi, le système selon l'invention offre une bonne opérabilité en exploitation ainsi qu'un coût avantageux, tout permettant un stockage et une restitution de d'énergie optimisés.

Selon un mode de mise en oeuvre de l'invention, le moyen de stockage de chaleur a une forme sensiblement cylindrique. Par exemple le moyen de stockage de la chaleur a la forme d'une colonne, qui peut être par exemple positionnée verticalement, l'axe de la colonne correspondant à l'axe vertical. Selon un mode de mise en oeuvre de l'invention, les lits fixes de particules du moyen de stockage de chaleur sont superposés selon l'axe de révolution du moyen de stockage de chaleur.

Selon un mode de mise en oeuvre de l'invention, le moyen de stockage de chaleur comprend des moyens d'injection et de soutirage de gaz comprimé placés perpendiculairement à la direction de la stratification induite par la superposition de lits fixes de particules. Ainsi, le flux de gaz comprimé traverse l'agencement étagé de lits fixes selon une direction principalement axiale par rapport à cet agencement étagé. Selon ce mode de réalisation, le flux de gaz comprimé traverse les lits fixes successivement, les uns après les autres, et, le moyen de stockage de chaleur selon l'invention comprenant au moins un moyen pour former une discontinuité du gradient thermique entre au moins deux lits adjacents, une stratification thermique est induite au sein du moyen de stockage (avec au moins une discontinuité du gradient thermique), la température étant relativement homogène dans une direction radiale par rapport à l'empilement des lits.

Selon un mode de mise en oeuvre de l'invention, un lit fixe comprend une paroi perméable au gaz, telle qu'une grille, et un empilement de particules de stockage de chaleur sur cette paroi. Un agencement étagé de tels lits fixes facilite en amont le chargement homogène de solide granulaire, et tend à permettre une meilleure homogénéité radiale de la température, indispensable au bon fonctionnement du système. Ce mode de réalisation peut être avantageusement et non limitativement combiné aux modes de réalisation qui seront par la suite déclinés dans la description ci-dessous.

Les figures illustratives de modes de réalisation de la présente invention seront par la suite représentées de manière non limitative et non exhaustive selon un moyen de stockage de chaleur ayant la forme d'une colonne, les lits fixes de particules du moyen de stockage de chaleur étant superposés selon l'axe de révolution de la colonne, et le moyen de stockage de chaleur comprenant des moyens d'injection et de soutirage de gaz perpendiculaires à la stratification induite par l'empilement de lits fixes.

Selon un mode de mise en oeuvre de l'invention, une discontinuité du gradient thermique entre au moins deux lits adjacents est obtenue en séparant lesdits lits fixes par une couche comprenant un matériau thermiquement isolant, à travers lesquelles le gaz peut circuler. Le matériau isolant peut être tout matériau à très faible conductivité thermique connu de l'homme du métier. Selon un mode de mise en oeuvre dans lequel les lits fixes comprennent une paroi perméable au gaz, on intercale entre de tels lits fixes une couche exempte de particules solides (remplie d'air par exemple, l'air étant le matériau thermiquement isolant). Les couches d'isolant thermique permettent de limiter la diffusion de la température d'un lit fixe de particules à un autre. L'utilisation de couches thermiquement isolantes permet ainsi l'obtention d'une stratification thermique (gradient thermique discontinu) au sein du moyen de stockage de chaleur et une meilleure redistribution du gaz. Par ailleurs, le fait de séparer les lits fixes par des couches d'isolant thermique (avec en sus une paroi imperméable dans le cas d'une couche isolante exempte de solide) permet une meilleure répartition des particules solides dans le moyen de stockage et ainsi de limiter les hétérogénéités hydrodynamiques et thermiques qui nuisent à l'efficacité du système.

Selon un mode de mise en oeuvre de l'invention, une couche comprenant un matériau isolant thermiquement est intercalée entre chaque lit fixe de particules formant le moyen de stockage de chaleur. Le gradient thermique au sein du moyen de stockage de chaleur selon l'invention est alors un gradient thermique par palier, ce qui permet une exploitation optimale du système de stockage et de restitution d'énergie par gaz comprimé selon l'invention.

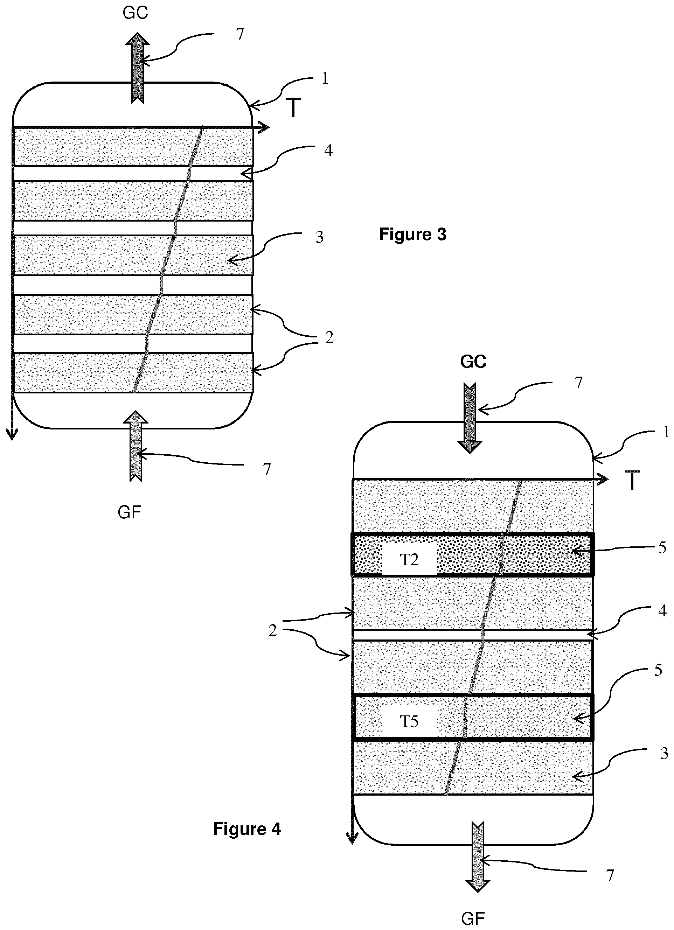

Les figures 2 et 3 illustrent un exemple de réalisation du moyen de stockage de chaleur 1 du système de stockage et de restitution de l'énergie par gaz comprimé, dans le cas de la phase de stockage (appelé aussi « charge » par la suite ; figure 2) et dans le cas de la phase de restitution (appelé aussi « décharge » par la suite ; figure 3). Selon cette variante du système selon l'invention, le moyen de stockage de chaleur 1 a la forme d'une colonne et est constitué de cinq lits fixes 2 de particules 3 disposés les uns au-dessus des autres, chaque lit étant séparé des lits adjacents par une couche d'isolant thermique 4. Les figures 2 et 3 présentent également la direction du flux de gaz comprimé, imprimée par des moyens d'injection et de soutirage de gaz comprimé 7 placés perpendiculairement à la direction de la stratification induite par les deux lits fixes de particules. Notamment les flèches foncées représentent la direction principale du gaz chaud alors que les flèches claires représentent la direction principale du gaz froid. Lors de la charge du moyen de stockage de la chaleur 1, illustrée en figure 3, le gaz chaud GC (en sortie des moyens de compression du gaz) est injecté par l'extrémité supérieure de la colonne 1. Ainsi, l'agencement du moyen de stockage de la chaleur selon l'invention impose une circulation du gaz comprimé dans le sens axial par rapport aux lits fixes, c'est-à-dire que le fluide à réchauffer ou à refroidir circule, d'un lit à l'autre, dans une direction perpendiculaire à l'empilement des lits fixes formant le moyen de stockage de la chaleur, en l'occurrence dans la direction axiale du moyen de stockage de chaleur (dans ce cas de la colonne). Lors de la décharge du moyen de stockage de la chaleur 1, illustrée en figure 3, le gaz froid GF (en sortie des moyens de stockage du gaz comprimé ou d'un étage de détente) est injecté par l'extrémité inférieure de la colonne 1. Le gaz froid GF traverse axialement les lits fixes 2, les uns après les autres. Puis, le gaz chaud GC est extrait de la colonne 1 dans la partie supérieure pour être dirigé vers les moyens de détente du système selon l'invention. A titre illustratif, l'évolution de la courbe de températures T au sein du moyen de stockage selon ce mode de réalisation est représentée artificiellement sur ces figures en trait plein. On peut noter que le gradient thermique présente bien des discontinuités, d'un lit à un autre, les discontinuités étant induites par les couches d'isolant thermique intercalées entre deux lits fixes adjacents.

Selon un autre mode de mise en oeuvre, une discontinuité du gradient thermique entre deux lits fixes adjacents est obtenue en utilisant des particules contenant un matériau à changement de phase (MCP) caractérisé par des températures de fusion différentes pour chacun des lits fixes de particules en question. L'utilisation de matériaux à changement de phase avec des températures de fusion différentes pour les lits fixes du moyen de stockage de chaleur permet d'induire un gradient thermique par paliers dans le moyen de stockage, et ainsi de limiter les phénomènes de diffusion thermique d'un lit fixe de particules à un autre lors des phases de stockage. Un autre avantage de ces matériaux réside dans le fait qu'ils permettent une réduction du volume de la cuve, en permettant de stocker une grande quantité d'énergie sous forme de chaleur latente. Un compromis entre efficacité et coût peut également être trouvé en mélangeant des MCP et des matériaux de stockage par chaleur sensible dans un même lit. Parmi les matériaux à changement de phase, on peut utiliser les matériaux suivants : les paraffines, dont la température de fusion est inférieure à 130°C, les sels qui fondent à des températures supérieures à 300°C, des mélanges (eutectiques) qui permettent d'avoir une large gamme de température de fusion.

Selon un mode de mise en oeuvre de l'invention, on place au moins un lit fixe à particules MCP à proximité de l'entrée du moyen de stockage de chaleur et/ou un lit fixe à particules MCP à proximité de la sortie du moyen de stockage de chaleur. On entend par entrée du moyen de stockage de chaleur l'endroit où le gaz comprimé chaud est introduit dans ledit moyen, et on appelle sortie du moyen de stockage de chaleur l'endroit où le gaz comprimé chaud sort dudit moyen. A noter que les entrée et sortie du moyen de stockage de chaleur peuvent varier au cours de l'exploitation du système de stockage d'énergie par gaz comprimé selon l'invention. Cette configuration permet de bénéficier des avantages des MCP pour contrôler le gradient thermique et réduire le volume de solide tout en diminuant le coût global, les MCP étant majoritairement plus chers que des matériaux à chaleur sensible. Pour cette variante, les températures de fusion des deux matériaux à changement de phase sont choisies de manière à assurer un certain niveau de température de l'air froid vers le stockage (côté froid) et de l'air chaud vers la turbine du AACAES (côté chaud). De manière facultative, un lit fixe de particules de matériau de stockage par chaleur sensible peut être placé avant l'étage du lit fixe de MCP côté chaud, et/ou après l'étage du lit fixe de MCP côté froid, de manière à absorber des éventuelles variations de la température d'entrée du moyen de stockage de la chaleur (sortie du compresseur lors de la charge, sortie du stockage d'air comprimé lors de la décharge). A tout moment, les étages de MCP contiennent un front de changement de phase, avec un certain pourcentage de la masse à l'état solide et le reste à l'état liquide.

Ainsi, pour ce mode de réalisation, la température dans un matériau MCP qui se trouve à la température du changement de phase reste constante pendant l'échange thermique, tant que le changement de phase se produit (échange de chaleur latente). Le principal avantage de ce mode de réalisation est donc de s'assurer une température constante d'entrée et de sortie du système de stockage de la chaleur, qui ne va pas varier avec le cyclage si la quantité de MCP est correctement dimensionnée (il faut qu'il y ait les 2 phases solide/liquide à tout moment pour s'assurer de maintenir la T constante). Ainsi, l'avantage principal de ce mode de réalisation est l'amélioration du contrôle du gradient thermique.

La température de fusion du MCP côté chaud peut être comprise entre 50 et 500°C, plus préférentiellement entre 100 et 400°C, et de manière encore plus préférée entre 100 et 350°C. La température de fusion du MCP côté froid est comprise entre 0 et 500°C, plus préférentiellement entre 5 et 200, et de manière encore plus préférée entre 10 et 100°C

Un exemple de ce mode de réalisation est présenté en figure 4. Dans cet exemple, le moyen de stockage de chaleur 1 a la forme d'une colonne, le côté chaud (respectivement froid) se situant en haut (respectivement en bas) de la colonne, et est formé de six lits fixes 2 de particules, deux de ces lits 2 étant formées de particules MCP 5, et les quatre autres lits 2 étant formés de particules à chaleur sensible 3. Selon cet exemple non limitatif de mise en oeuvre de l'invention, les lits fixes à particules MCP 5 sont placés en deuxième position par rapport aux entrée et sortie du gaz comprimé du moyen de stockage de chaleur. Lors de la phase charge représentée sur la figure 4, le gaz chaud GC (en sortie des moyens de compression) est injecté par l'extrémité supérieure de la colonne 1. Le gaz chaud traverse axialement les lits fixes 2 en passant successivement de l'un à l'autre. Puis, le gaz refroidi GF est extrait de la colonne 1 dans la partie inférieure pour être stocké dans les moyens de stockage du gaz comprimé du système AACAES ou bien pour être injecté dans une nouvelle étape de compression. Lors de la décharge (non représentée) du moyen de stockage de la chaleur 1, le gaz parcourt le chemin inverse (entrée du gaz froid par le bas et sortie du gaz chaud par le haut). Les lits à particules MCP 5 ainsi placés permettent notamment d'assurer un bon maintien dans le temps des paliers thermiques en entrée et sortie du moyen de stockage de chaleur. A titre illustratif, l'évolution de la courbe de températures T au sein du moyen de stockage selon ce mode de réalisation est représentée artificiellement sur cette figure en trait plein. On peut noter que le gradient thermique présente bien des discontinuités, d'un lit à un autre du fait de l'utilisation de MPC ayant des températures de fusion différente d'un lit à l'autre.

Selon un mode particulier de mise en oeuvre de l'invention, chacun des lits fixes de particules du moyen de stockage comprend des particules contenant un matériau à changement de phase (MCP) caractérisé par des températures de fusion différentes. Les températures de fusion des différents matériaux à changement de phase sont choisies de manière à assurer un gradient de températures prédéterminé dans le lit multi-étagé. Les écarts de température à l'intérieur de chaque lit par rapport à la moyenne du lit considéré sont alors très faibles, et le gradient thermique est alors un gradient thermique par palier, chaque palier étant très nettement différencié du voisin, ce qui permet une très bonne maitrise du gradient de température au sein du moyen de stockage de chaleur. De manière facultative, une couche de matériau de stockage par chaleur sensible peut être placée avant le premier étage de MCP côté chaud, et/ou après le dernier étage de MCP côté froid, de manière à absorber des éventuelles variations de la température d'entrée du TES (sortie du compresseur lors de la charge, sortie du stockage d'air comprimé ou d'une étage de détente lors de la décharge).

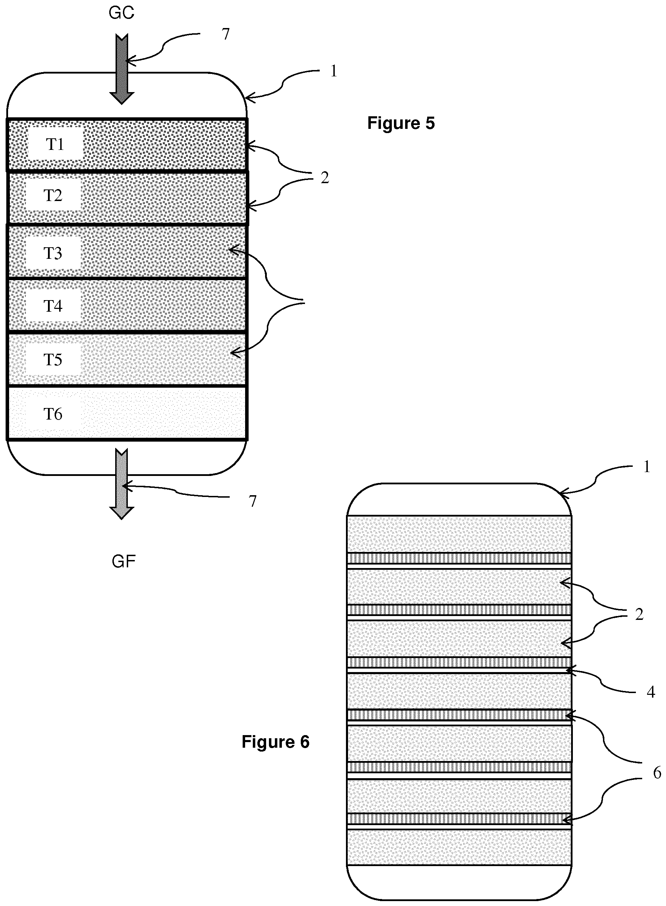

Un exemple de réalisation d'un tel mode de mise en oeuvre de l'invention est présenté en figure 5. Dans cet exemple, le moyen de stockage de chaleur 1 a la forme d'une colonne, le côté chaud (respectivement froid) se situant en haut (respectivement en bas) de la colonne, et est formé de six lits fixes 2 de particules MCP 5. Les particules MCP 5 de chaque lit fixe 2 possèdent une température de fusion différente T1, T2, T3, T4, T5 et T6, avec T6<T5<T4<T3<T2<T1, le lit fixe avec les MCP ayant la température de fusion T1 étant du côté chaud (injection/soutirage du gaz chaud GC), et le lit fixe avec les MCP ayant la température de fusion T6 étant du côté froid (injection/soutirage du gaz froid GF). Lors de la phase charge représentée sur la figure 5, le gaz chaud GC (en sortie des moyens de compression) est injecté par l'extrémité supérieure de la colonne 1. Le gaz chaud traverse axialement les lits fixes 2 en passant successivement de l'un à l'autre. Puis, le gaz refroidi GF est extrait de la colonne 1 dans la partie inférieure pour être stocké dans les moyens de stockage du gaz comprimé du système AACAES ou bien pour être injecté dans une nouvelle étape de compression. Lors de la décharge (non représentée) du moyen de stockage de la chaleur 1, le gaz parcourt le chemin inverse (entrée du gaz froid par le bas et sortie du gaz chaud par le haut). L'avantage principal d'étager des MCP est une maîtrise accrue du gradient thermique, et donc une maîtrise accrue des températures d'entrée/sortie du moyen de stockage au cours des cycles de charge/décharge.

Selon un mode de mise en oeuvre de l'invention, le moyen de stockage de chaleur du système de stockage et de restitution d'énergie par gaz comprimé selon l'invention peut comprendre à la fois un ou des lits fixes de particules MCP et une ou des couches comprenant un matériau thermiquement isolant, un lit fixe comprenant des particules MCP pouvant par exemple être séparé d'un autre lit fixe, à MCP ou non, par une couche d'isolant thermique. Ces deux moyens de maintien d'une température homogène au sein des lits fixes, tout en permettant des discontinuités du gradient thermique, utilisés en combinaison, permettent d'optimiser la maîtrise du gradient thermique de températures au sein du moyen de stockage de chaleur.

La plage de températures sur laquelle le moyen de stockage de la chaleur peut fonctionner est comprise entre 0°et 500°C, plus préférentiellement entre 100 et 400°C, et de manière encore plus préférée entre 100 et 350°C. Les niveaux de température dépendent à la fois du procédé complet et du type de matériau utilisé pour les particules des lits fixes du moyen de stockage de la chaleur.

Dans les configurations décrites précédemment, les moyens d'injection et de soutirage du gaz sont prévus aux extrémités du moyen de stockage de la chaleur. En variante, des moyens complémentaires d'injection et de soutirage du gaz peuvent être prévus à des niveaux intermédiaires du moyen de stockage de la chaleur. Ainsi, le système de la présente invention peut être doté de points d'injection et de soutirage complémentaires à chaque étage (à chaque lit fixe), qui permettent de contrôler, de manière avantageuse, le débit de fluide qui traverse chaque étage. Cette variante de réalisation est compatible avec toutes les configurations envisageables précédemment décrites du moyen de stockage de la chaleur.

Un avantage de cette réalisation est que le système d'injection/soutirage par étage permet de réduire les pertes de charge dans le système et de mieux contrôler le gradient de températures dans le lit fixe. En effet, les injections/soutirages au plus près du gradient thermique permettent de limiter les pertes de charge (le nombre de lits traversés étant réduit) tout en conservant de bonnes performances de transfert thermique. Ainsi, et en fonction de la hauteur du gradient thermique par rapport à la hauteur du lit, une diminution très importante de la perte de charge peut être obtenue. Pour cette réalisation, le gradient thermique est discontinu entre les lits fixes individualisés situés entre les moyens complémentaires d'injection et de soutirage utilisés, c'est-à-dire les lits fixes stockant ou restituant de la chaleur.

Selon un mode de mise en oeuvre de l'invention, les moyens d'injection et de soutirage complémentaires du moyen de stockage de chaleur comprennent une grille de distribution qui vient s'intercaler entre deux lits fixes de particules. A noter que le flux de gaz comprimé induit par ces moyens d'injection et de soutirage complémentaires comprend une composante radiale locale (au niveau de la grille et autour de la grille), mais le flux de gaz comprimé au travers des lits de l'agencement étagé reste malgré tout principalement axial. Préférentiellement, une couche d'isolant thermique est accolée à l'une des faces de la grille, de façon à limiter les échanges thermiques entre les lits entre lesquelles la grille de distribution est accolée. La figure 6 présente un exemple non limitatif de mise en oeuvre d'un moyen de stockage 1 comportant des moyens d'injection et de soutirage complémentaires comprenant une grille 6, ainsi qu'une couche d'isolant thermique 4, insérés entre chaque étage de lits fixes 2 de particules.

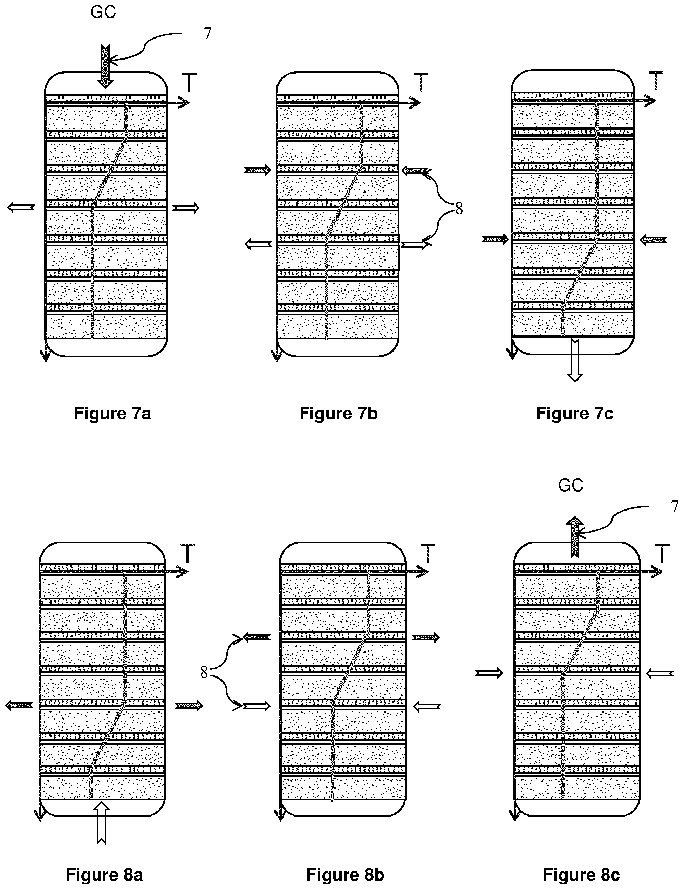

Sur les figures 7a, 7b à 7c sont illustrées (de manière non limitative) trois phases consécutives de charge d'un système de stockage de chaleur ayant la forme d'une colonne, le côté chaud (respectivement froid) se situant en haut (respectivement en bas) de la colonne, et constitué de sept étages de lits fixes de particules. Le moyen de stockage de ce mode de réalisation comporte des moyens principaux d'injection (flèches foncées) et de soutirage (flèches claires) 7, et en outre, des moyens complémentaires d'injection (flèches foncées) et de soutirage (flèches claires) 8 installés à chaque étage, intercalés avec une couche d'isolant thermique. Le gradient de températures T axial, au début de chacune de ces phases, est artificiellement représenté dans le lit multi-étagé par un trait plein. Lors de la première phase de charge (figure 7a), le gaz chaud GC est injecté par le haut et est distribué sur un ou plusieurs étages (le nombre d'étages peut varier en fonction du débit par exemple). Selon cet exemple, la charge se fait sur trois étages (figure 7a) en même temps, c'est-à-dire que le fluide chaud traverse trois étages avant de sortir du moyen de stockage de la chaleur par un premier moyen de soutirage complémentaire situé entre les troisième et quatrième lits. Lorsque la température de charge est atteinte dans ces étages, l'injection se fait par un moyen complémentaire 8 directement dans l'un des étages inférieurs (figures 7b et 7c). Ainsi, la charge d'un tel système peut se faire séquentiellement, par étage, ou groupe d'étages, de l'entrée vers la sortie, ce qui permet de limiter les pertes de charge puisque le gaz ne traverse pas l'ensemble du lit de particules.

Pour cette variante de réalisation, le processus de décharge peut se faire également séquentiellement, par groupe d'étages du bas du moyen de stockage vers le haut. Lors de cette phase, la décharge peut également se faire sur un nombre d'étages diffèrent, comme illustré en figures 8a à 8c où la décharge se fait par groupes de cinq ou quatre étages.

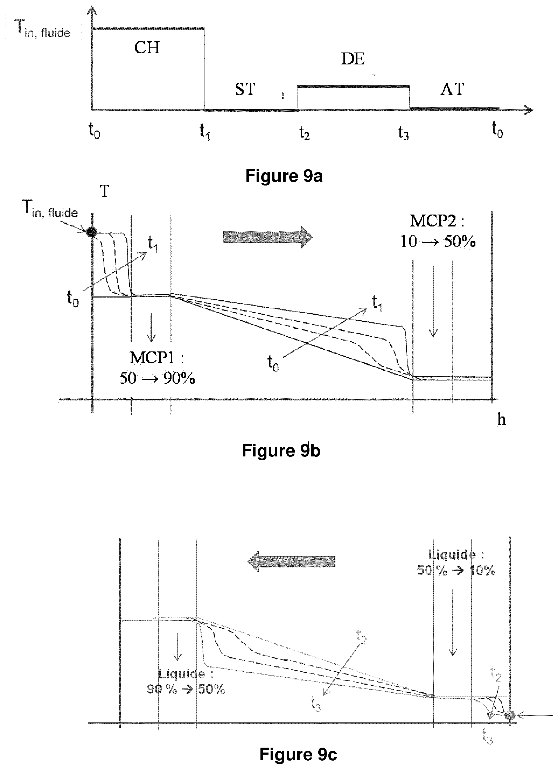

La figure 9a illustre un exemple d'un cycle d'utilisation d'un système AACAES. Cette figure correspond à la variation de la température du gaz en entrée du côté chaud Tin, fluide du moyen de stockage de la chaleur. Le cycle d'utilisation comporte une première phase de charge CH (stockage d'énergie) entre les instants t0 et t1, puis une deuxième phase de stockage ST (stockage d'énergie) entre les instants t1 et t2, puis une phase de décharge DE (restitution de l'énergie) entre les instants t2 et t3, et une phase d'attente AT entre les instants t3 et t0.

Les figures 9b et 9c représentent l'évolution temporelle du profil axial (c'est-à-dire le long de l'axe de révolution du moyen de stockage de la chaleur, h étant la distance prise le long de cet axe) de la température T dans les lits fixes, lors des phases de charge et décharge pour le cycle d'utilisation de la figure 9a. Pour cet exemple, le moyen de stockage de la chaleur correspond au mode de réalisation de la figure 4, pour lequel le moyen de stockage de la chaleur comporte deux lits fixes avec des MCP, chaque lit fixe de MCP ayant une température de fusion différente et étant placé à proximité (en deuxième position) des extrémités du moyen de stockage de la chaleur. Sur ces figures, les traits verticaux délimitent les lits fixes comportant les particules MCP. La figure 9b correspond à la phase de charge CH de la figure 9a, et la figure 9c correspond à la phase de décharge DE de la figure 9a.

Sur la figure 9a, on indique qu'en début du cycle (à t0), le lit fixe avec les particules MCP1 côté chaud du moyen de stockage de la chaleur contient 50% de la masse à l'état solide et 50% à l'état liquide. Lors de la charge, le gaz chaud traverse le moyen de stockage de la chaleur en rentrant par le côté chaud. La fraction de liquide augmente, de la chaleur latente étant stockée dans l'étage à MCP1. La température est maintenue constante (et égale à la température de fusion du MCP1). A la fin de la charge, 90% du MCP1 se trouve à l'état liquide.

Le gradient de température s'établit dans la partie du TES qui est remplie de matériel de stockage à chaleur sensible.

Du côté froid, l'étage de MCP2 contient initialement 10% de liquide et 90% de solide. Pendant la charge, sa température est maintenue constante (et égale à la température de fusion du MCP2). A la fin de la charge, 50% du MCP2 se trouve à l'état liquide.

Le processus est inversé lors de la phase de décharge entre t2 et t3. Sur la figure 9c, on observe que le fluide froid rentre par le côté froid et se réchauffe, absorbant de la chaleur latente dans l'étage MCP2 et diminuant la proportion du liquide dans cet étage (qui passe à nouveau de 50% à 10%). La température est maintenue toujours constante (et égale à la température de fusion du MCP2).

Un nouveau gradient de température s'établit dans la partie du TES qui est remplie de matériau de stockage à chaleur sensible.

Côté chaud, dans l'étage de MCP1 la quantité de liquide diminue au passage du fluide et passe de 90% à 50%, en gardant sa température toujours constante (et égale à la température de fusion du MCP1).

La présente invention concerne également un procédé de stockage et de restitution par gaz comprimé, dans lequel on réalise les étapes suivantes :
a) on comprime un gaz, notamment au moyen d'un compresseur ;
b) on refroidit le gaz comprimé par échange de chaleur, en particulier dans un moyen de stockage de la chaleur ;
c) on stocke le gaz comprimé refroidi, notamment par un moyen de stockage de gaz comprimé ;
d) on chauffe le gaz comprimé stocké, par échange de chaleur, dans le moyen de stockage de la chaleur ; et
e) on détend le gaz comprimé chauffé pour générer une énergie, par exemple au moyen d'une turbine pour générer une énergie électrique.

Selon l'invention, le moyen de stockage de la chaleur comporte au moins deux lits fixes de particules de stockage de la chaleur et au moins un moyen pour former une discontinuité du gradient thermique entre au moins deux lits adjacents. Cet agencement multi-étagé de lits fixes de particules combiné à des moyens de discontinuité du gradient thermique permet de créer une stratification thermique au sein du moyen de stockage, mais aussi de mieux contrôler la porosité dans chacun des lits, et donc d'éviter la formation de poches froides qui nuisent à l'efficacité du système. Ainsi, le stockage et la restitution d'énergie sont optimisés.

Selon un aspect de l'invention, le procédé comporte plusieurs étapes de compression successives, au moyen de compresseurs placés en série, également appelés compressions étagées. Dans ce cas, on réitère les étapes a) et b) pour chaque étage de compression. Ainsi, le gaz est comprimé et refroidi plusieurs fois.

Selon une caractéristique de l'invention, le procédé comporte plusieurs étapes de détente successives, par des moyens de détente placés en série, également appelés détentes étagées. Dans ce cas, on réitère les étapes d) et e) pour chaque étage de détente. Ainsi, le gaz est chauffé et détendu plusieurs fois.

L'étape a) concerne la compression d'un gaz, par exemple de l'air. Il peut s'agit notamment d'air prélevé dans le milieu ambiant.

L'étape b) permet de refroidir le gaz comprimé après chaque étape de compression, ce qui permet d'optimiser le rendement de la compression suivante et/ou le stockage d'énergie. Les moyens de stockage de la chaleur permettent, lors du stockage du gaz comprimé (compression), de récupérer un maximum de chaleur issue de la compression du gaz en sortie des compresseurs et de diminuer la température du gaz avant le passage à la compression suivante ou avant le stockage. Par exemple, le gaz comprimé peut passer d'une température supérieure à 150 °C, par exemple environ 190 °C à une température inférieure à 80 °C , par exemple environ 50 °C.

L'étape c) peut être réalisée au sein d'un moyen de stockage du gaz comprimé, qui peut être un réservoir naturel ou non (par exemple une cavité souterraine). Le moyen de stockage du gaz comprimé peut être en surface ou en sous-sol. De plus, il peut être formé d'un unique volume ou d'une pluralité de volumes connectés entre eux ou non. Lors du stockage, on ferme le moyen de stockage du gaz comprimé.

Le gaz comprimé est stocké jusqu'au moment où on souhaite récupérer l'énergie stockée. L'étape d) et les suivantes sont réalisées au moment où on souhaite récupérer l'énergie stockée.

L'étape d) permet de chauffer l'air comprimé avant chaque détente, ce qui permet d'optimiser le rendement de la détente suivante. Pour l'étape d), on peut utiliser les particules de stockage de la chaleur qui ont servi à refroidir lors de l'étape b). Les moyens de stockage de la chaleur permettent, lors de la restitution de l'énergie, de restituer un maximum de chaleur stockée en augmentant la température du gaz avant le passage à la détente suivante. Par exemple, le gaz peut passer d'une température inférieure à 80 °C, par exemple environ 50 °C, à une température supérieure à 150 °C, par exemple environ 180 °C.

Lors de l'étape e), le gaz comprimé est détendu. La détente du gaz comprimé permet de générer une énergie. Cette détente peut être réalisée au moyen d'une turbine qui génère une énergie électrique. Si le gaz est de l'air, l'air détendu peut être évacué dans le milieu ambiant.

Le procédé selon l'invention peut être mis en oeuvre par le système selon l'une quelconque des variantes de l'invention décrites précédemment (seules ou en combinaison). Le procédé selon l'invention peut notamment comprendre une étape de stockage et/ou de restitution de la chaleur comprenant une ou plusieurs des caractéristiques ci-dessous :
- un échange de chaleur dans une pluralité de lits fixes,
- une circulation du gaz axiale d'un lit à un autre,
- une injection et un soutirage du gaz aux extrémités du moyen de stockage de la chaleur et/ou à des niveaux intermédiaires,
- les particules de stockage de la chaleur peuvent être des particules de matériau à changement de phase, ces particules MCP peuvent être placées dans des lits fixes situés à proximité des extrémités du moyen de stockage de la chaleur,
- une circulation du gaz chaud depuis la partie supérieure vers la partie inférieure de la colonne, ou inversement depuis la partie inférieure vers la partie supérieure de la colonne...

Selon une variante de réalisation du procédé, la charge et la décharge du moyen de stockage de la chaleur peuvent être séquentielles. En particulier, pour le mode de réalisation, pour lequel on injecte et/ou on soutire le gaz à des niveaux intermédiaires (figures 7 et 8), le procédé peut comprendre les étapes suivantes :
i) on stocke la chaleur sur une première portion des lits fixes par un premier échange de chaleur avec ledit gaz, par exemple avec les lits fixes supérieurs du moyen de stockage de la chaleur, le gaz chaud étant injecté dans le moyen de stockage de la chaleur par des moyens d'injection et de soutirage situés dans la partie supérieure du moyen de stockage de la chaleur, et le gaz froid étant soutiré du moyen de stockage de la chaleur par des moyens d'injection et de soutirage situés à un niveau intermédiaire du moyen de stockage de la chaleur ;
ii) on stocke la chaleur sur une deuxième portion des lits fixes par un deuxième échange de chaleur avec ledit gaz, par exemple avec les lits fixes inférieurs du moyen de stockage de la chaleur, le gaz chaud étant injecté dans le moyen de stockage de la chaleur par des moyens d'injection et de soutirage situés dans la partie intermédiaire du moyen de stockage de la chaleur, et le gaz froid étant soutiré du moyen de stockage de la chaleur par des moyens d'injection et de soutirage situés à un niveau intermédiaire, ou dans la partie inférieure du moyen de stockage de la chaleur ; et
iii) on restitue la chaleur de ladite première et/ou deuxième portion par échange de chaleur avec ledit gaz, le gaz froid étant injecté dans le moyen de stockage de la chaleur par des moyens d'injection et de soutirage situés dans la partie inférieure du moyen de stockage de la chaleur, et le gaz chaud étant soutiré du moyen de stockage de la chaleur par des moyens d'injection et de soutirage situés à un niveau intermédiaire, ou dans la partie supérieure du moyen de stockage de la chaleur.

Ce mode de réalisation permet de limiter les pertes de charge au sein du moyen de stockage de la chaleur.

Avantageusement, les étapes i) et ii) peuvent être répétées pour d'autres portions des lits fixes du moyen de stockage de la chaleur.

Selon une variante, on peut restituer la chaleur pour seulement une portion des lits fixes du moyen de stockage de la chaleur.

Le procédé et le système selon l'invention peuvent être utilisés pour le stockage d'une énergie intermittente, telle que l'énergie éolienne ou solaire, afin de pouvoir utiliser cette énergie au moment désiré.

## Revendications

1. Système de stockage et de restitution d'énergie par gaz comprimé comportant au moins un moyen de compression (12) de gaz, au moins un moyen de stockage du gaz comprimé (13), au moins un moyen de détente (14) dudit gaz comprimé pour générer une énergie, et au moins un moyen de stockage de la chaleur (1), ledit moyen de stockage de la chaleur (1) comportant un agencement étagé formé d'au moins deux lits fixes (2) de stockage de la chaleur, et au moins un moyen (4,5) pour former une discontinuité du gradient thermique entre au moins deux lits (2) adjacents, **caractérisé en ce que** les deux lits sont des lits de particules de stockage de la chaleur.

2. Système selon la revendication 1, dans lequel lesdits deux lits fixes (2) sont séparés par une paroi perméable audit gaz.

3. Système selon l'une des revendications précédentes, dans lequel un desdits moyens de discontinuité dudit gradient thermique comprend une couche formée d'un matériau isolant thermiquement (4), ladite couche séparant au moins deux desdits lits fixes (2).

4. Système selon l'une des revendications 1 à 3, dans lequel un desdits moyens de discontinuité dudit gradient thermique est formé par au moins deux desdits lits fixes (2) comportant des particules de matériau à changement de phase (5).

5. Système selon la revendication 4, dans lequel au moins deux desdits lits fixes (2) comportent des particules de matériau à changement de phase (5) de température de fusion différente et sont situés chacun à proximité d'une des extrémités dudit moyen d'échange de la chaleur (1).

6. Système selon la revendication 4, dans lequel au moins deux desdits lits fixes (2) comportent des particules de matériau à changement de phase (5) de température de fusion différente et sont situés en deuxième position dudit agencement en comptant à partir d'une extrémité dudit moyen d'échange de la chaleur (1).

7. Système selon l'une des revendications précédentes, dans lequel un passage principalement axial dudit gaz comprimé au travers desdits lits fixes (2) est induit par des moyens d'injection et de soutirage de gaz comprimé (7) placés perpendiculairement audit agencement étagé desdits lits (2).

8. Système selon la revendication 7, dans lequel ledit moyen de stockage (1) comporte des moyens d'injection et de soutirage de gaz complémentaires (6) situés à au moins un étage dudit agencement étagé de lit fixes (2) de particules de stockage.

9. Système selon la revendication 8, dans lequel lesdits moyens d'injection et de soutirage de gaz comprimé complémentaires (6) comprennent une grille de distribution intercalée entre lesdits lits constitutifs (2) dudit étage.

10. Système selon la revendication 9, dans lequel une couche formée d'un matériau isolant thermiquement (4) est accolée sur l'une des faces de ladite grille.

11. Procédé de stockage et de restitution d'énergie par gaz comprimé, en utilisant un système selon l'une quelconque des revendications 1 à 10, dans lequel on réalise les étapes suivantes :
a) on comprime un gaz ;
b) on refroidit ledit gaz comprimé par échange de chaleur dans un moyen de stockage de la chaleur (1) ;
c) on stocke ledit gaz refroidi ;
d) on chauffe ledit gaz comprimé refroidi par restitution de la chaleur dans ledit moyen de stockage de la chaleur (1) ; et
e) on détend ledit gaz comprimé chauffé pour générer une énergie,
**caractérisé en ce que** pour stocker et restituer la chaleur, ledit gaz traverse ledit moyen de stockage de la chaleur, ledit moyen comportant un agencement étagé formé d'au moins deux lits fixes (2) de particules de stockage de la chaleur, et au moins un moyen (4,5) pour former une discontinuité du gradient thermique entre au moins deux lits adjacents.

12. Procédé selon la revendication 11, dans lequel on injecte et on soutire ledit gaz aux extrémités dudit moyen de stockage de la chaleur.

13. Procédé selon la revendication 11, dans lequel on injecte et on soutire ledit gaz au niveau d'au moins un lit fixe intermédiaire.

14. Procédé selon la revendication 12, dans lequel on met en oeuvre les étapes suivantes :
i) on stocke la chaleur sur une première portion desdits lits fixes par un premier échange de chaleur avec ledit gaz ;
ii) on stocke la chaleur sur une deuxième portion desdits lits fixes par un deuxième échange de chaleur avec ledit gaz ; et
iii) on restitue la chaleur de ladite première et/ou deuxième portion par échange de chaleur avec ledit gaz.

## Patentansprüche

1. System zur Speicherung und Rückgewinnung von Energie durch komprimiertes Gas, umfassend mindestens ein Mittel (12) zum Komprimieren von Gas, mindestens ein Mittel (13) zum Speichern von komprimierten Gas, mindestens ein Mittel (14) zum Entspannen des komprimierten Gases, um Energie zu erzeugen, und mindestens ein Mittel (1) zum Speichern von Wärme, wobei das Wärmespeichermittel (1) eine Stufenanordnung umfasst, die aus mindestens zwei Festbetten (2) zum Speichern von Wärme gebildet ist, und mindestens ein Mittel (4, 5) zum Bilden einer Diskontinuität des thermischen Gradienten zwischen mindestens zwei benachbarten Betten (2), **dadurch gekennzeichnet, dass** die beiden Betten Partikelbetten zum Speichern von Wärme sind.

2. System nach Anspruch 1, wobei die beiden Festbetten (2) durch eine für das Gas durchlässige Wand getrennt sind.

3. System nach einem der vorhergehenden Ansprüche, wobei eines der Diskontinuitätsmittel des thermischen Gradienten eine Schicht umfasst, die aus einem thermisch isolierenden Material (4) gebildet ist, wobei die Schicht mindestens zwei der Festbetten (2) trennt.

4. System nach einem der Ansprüche 1 bis 3, wobei eines der Diskontinuitätsmittel des thermischen Gradienten durch mindestens zwei der Festbetten (2) gebildet wird, die Materialpartikel zur Phasenänderung (5) umfassen.

5. System nach Anspruch 4, wobei mindestens zwei der Festbetten (2) Materialpartikel zur Phasenänderung (5) mit einer unterschiedlichen Schmelztemperatur umfassen und jeweils in der Nähe eines der Enden des Wärmetauschermittels (1) angeordnet sind.

6. System nach Anspruch 4, wobei mindestens zwei der Festbetten (2) Materialpartikel zur Phasenänderung (5) mit einer unterschiedlichen Schmelztemperatur umfassen und in einer zweiten Position der Anordnung angeordnet sind, gezählt von einem Ende des Wärmetauschermittels (1).

7. System nach einem der vorhergehenden Ansprüche, wobei eine axiale Hauptpassage des komprimierten Gases quer durch die Festbetten (2) durch Injektions- und Abzugsmittel (7) für das komprimierte Gas induziert wird, die rechtwinklig zur Stufenanordnung der Betten (2) platziert sind.

8. System nach Anspruch 7, wobei das Speichermittel (1) komplementäre Injektions- und Abzugsmittel (6) für das komprimierte Gas umfasst, die in mindestens einer Stufe der Stufenanordnung der Festbetten (2) aus Speicherpartikeln angeordnet sind.

9. System nach Anspruch 8, wobei die komplementären Injektions- und Abzugsmittel (6) für das komprimierte Gas ein Verteilungsgitter umfassen, das zwischen den die Stufe bildenden Betten (2) angeordnet ist.

10. System nach Anspruch 9, wobei eine Schicht, die aus einem thermisch isolierenden Material (4) gebildet ist, auf einer der Flächen des Gitters aufgebracht ist.

11. Verfahren zur Speicherung und Rückgewinnung von Energie durch komprimiertes Gas, unter Verwendung eines Systems nach einem der Ansprüche 1 bis 10, wobei die folgenden Schritte durchgeführt werden:
a) ein Gas wird komprimiert;
b) das komprimierte Gas wird durch Wärmeaustausch in einem Wärmespeichermittel (1) abgekühlt;
c) das abgekühlte Gas wird gespeichert;
d) das abgekühlte komprimierte Gas wird durch Wärmerückgewinnung im Wärmespeichermittel (1) erhitzt; und
e) das erhitzte komprimierte Gas wird entspannt, um Energie zu erzeugen;
**dadurch gekennzeichnet, dass** zum Speichern und Rückgewinnen von Wärme das Gas das Wärmespeichermittel durchquert, wobei das Mittel umfasst: eine Stufenanordnung, die aus mindestens zwei Festbetten (2) aus Partikeln zum Speichern von Wärme gebildet wird, und mindestens ein Mittel (4, 5) zum Bilden einer Diskontinuität des thermischen Gradienten zwischen mindestens zwei benachbarten Betten.

12. Verfahren nach Anspruch 11, wobei das Gas an den Enden des Wärmespeichermittels injiziert und abgezogen wird.

13. Verfahren nach Anspruch 11, wobei das Gas auf der Ebene mindestens eines dazwischenliegenden Festbetts injiziert und abgezogen wird.

14. Verfahren nach Anspruch 12, wobei die folgenden Schritte durchgeführt werden:
i) die Wärme wird auf einem ersten Abschnitt der Festbetten durch einen ersten Wärmeaustausch mit dem Gas gespeichert;
ii) die Wärme wird auf einem zweiten Abschnitt der Festbetten durch einen zweiten Wärmeaustausch mit dem Gas gespeichert; und
iii) die Wärme des ersten Abschnitts und/oder des zweiten Abschnitts wird durch einen Wärmeaustausch mit dem Gas rückgewonnen.

## Claims

1. A compressed gas energy storage and release system comprising at least one gas compression means (12), at least one compressed gas storage means (13), at least one expansion means (14) for expanding said compressed gas in order to generate energy and at least one heat storage means (1), said heat storage means (1) comprising a stepped arrangement consisting of at least two fixed heat storage beds (2) and at least one means (4, 5) providing thermal gradient discontinuity between at least two adjacent beds (2), **characterized in that** the two beds are heat storage particle beds.

2. A system as claimed in claim 1, wherein said two fixed beds (2) are separated by a wall permeable to said gas.

3. A system as claimed in any one of the previous claims, wherein one of said means providing discontinuity of said thermal gradient comprises a layer consisting of a thermally insulating material (4), said layer separating at least two of said fixed beds (2).

4. A system as claimed in any one of claims 1 to 3, wherein one of said means providing discontinuity of said thermal gradient consists of at least two of said fixed beds (2) comprising phase change material particles (5).

5. A system as claimed in claim 4, wherein at least two of said fixed beds (2) comprise phase change material particles (5) with different melting temperatures and they are each located close to one of the ends of said heat exchange means (1).

6. A system as claimed in claim 4, wherein at least two of said fixed beds (2) comprise phase change material particles (5) with different melting temperatures and they are in second position in said arrangement, counting from one end of said heat exchange means (1).

7. A system as claimed in any one of the previous claims, wherein a mainly axial passage of said compressed gas through said fixed beds (2) is induced by compressed gas injection and withdrawal means (7) positioned perpendicular to said stepped arrangement of said beds (2).

8. A system as claimed in claim 7, wherein said storage means (1) comprises supplementary gas injection and withdrawal means (6) located at least at one stage of said stepped arrangement of fixed storage particle beds (2).

9. A system as claimed in claim 8, wherein said supplementary compressed gas injection and withdrawal means (6) include a distribution grate interposed between said constituent beds (2) of said stage.

10. A system as claimed in claim 9, wherein a layer consisting of a thermally insulating material (4) is adjoined to one of the faces of said grate.

11. A compressed gas energy storage and release method using a system as claimed in any one of claims 1 to 10, wherein the following steps are carried out:
a) compressing a gas,
b) cooling said compressed gas by heat exchange in a heat storage means (1),
c) storing said cooled gas,
d) heating said cooled compressed gas by heat release in said heat storage means (1), and
e) expanding said heated compressed gas in order to generate energy,
**characterized in that**, in order to store and to release heat, said gas flows through said heat storage means, said means comprising a stepped arrangement consisting of at least two fixed heat storage particle beds (2), and at least one means (4, 5) providing thermal gradient discontinuity between at least two adjacent beds.

12. A method as claimed in claim 11, wherein said gas is injected and withdrawn at the ends of said heat storage means.

13. A method as claimed in claim 11, wherein said gas is injected and withdrawn at least at one intermediate fixed bed.

14. A method as claimed in claim 12, wherein the following steps are carried out:
i) storing the heat in a first portion of said fixed beds by a first heat exchange with said gas,
ii) storing the heat in a second portion of said fixed beds by a second heat exchange with said gas, and
iii) releasing the heat of said first and/or second portion by heat exchange with said gas.
